(19) Europäisches Patentamt
European Patent Office
Office européen des brevets

(11) EP 3 087 718 B1

(12) **FASCICULE DE BREVET EUROPEEN**

(45) Date de publication et mention de la délivrance du brevet:
**27.10.2021 Bulletin 2021/43**

(21) Numéro de dépôt: **14828205.6**

(22) Date de dépôt: **11.12.2014**

(51) Int Cl.:
***H04L 29/06*** *(2006.01)* ***H04L 29/12*** *(2006.01)*
***H04L 9/32*** *(2006.01)*

(86) Numéro de dépôt international:
**PCT/FR2014/053291**

(87) Numéro de publication internationale:
**WO 2015/097357 (02.07.2015 Gazette 2015/26)**

(54) **OBTENTION DE DONNEES DE CONNEXION A UN EQUIPEMENT VIA UN RESEAU**

ERHALTEN VON DATEN ZUM ANSCHLUSS AN EINE VORRICHTUNG ÜBER EIN NETZWERK

OBTAINING DATA FOR CONNECTION TO A DEVICE VIA A NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.12.2013 FR 1363441**

(43) Date de publication de la demande:
**02.11.2016 Bulletin 2016/44**

(73) Titulaire: **ORANGE**
**92130 Issy-les-Moulineaux (FR)**

(72) Inventeurs:
- **FRANCOIS, Alexandre**
**F-83600 Frejus (FR)**
- **VIZZARI, Cyril**
**F-06250 Mougins (FR)**
- **ESCHARD, Ludovic**
**F-75015 Paris (FR)**

(74) Mandataire: **Plasseraud IP**
**66, rue de la Chaussée d'Antin**
**75440 Paris Cedex 09 (FR)**

(56) Documents cités:
**US-A1- 2003 163 737** **US-A1- 2009 112 814**
**US-A1- 2009 144 437**

- **None**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 087 718 B1

## Description

L'invention concerne le domaine des réseaux de télécommunication et plus précisément une méthode d'obtention de données de connexion pour la connexion d'un terminal à un équipement distant via un réseau.

Lorsqu'un terminal A a besoin de se connecter à un équipement B distant via un réseau, par exemple une connexion au travers d'un réseau étendu (WAN, Wide Area Network) public tel que le réseau Internet à une passerelle d'accès d'un réseau local (LAN, Local Area Network), il est nécessaire que ce terminal A dispose de données de connexion à cet équipement B. Dans le cas d'une connexion IP (Internet Protocol), ces données de connexion incluent l'adresse IP publique et un port de communication public ouvert sur l'équipement. Ces données de connexion identifient de manière unique l'équipement B et permettent d'établir une connexion avec cet équipement.

Or l'adresse IP publique d'une passerelle est potentiellement variable. Il en va de même des ports de communication de cette passerelle qui sont ouverts vers le réseau Internet: ceux-ci peuvent être changés dynamiquement pour répondre à un souci de sécurisation des accès à cette passerelle à partir du réseau.

L'obtention des données de connexion d'une passerelle suppose actuellement de faire appel à un serveur C de nom de domaine, référençant dans un annuaire un nom de domaine en association avec une identification de la passerelle et l'adresse IP publique allouée à cette passerelle, ainsi que le ou les ports de communication ouverts par cette passerelle.

L'obtention des données de connexion suppose actuellement que:

1) la passerelle ou l'équipement B envoie des notifications vers le serveur C pour demander le référencement de l'équipement dans l'annuaire à chaque mise à jour par l'équipement de ses données de connexion,
2) le serveur C enregistre les données de connexion en association avec une clé de référencement comprenant un identifiant de la passerelle,
3) le serveur fournisse au terminal les données de connexion demandées, sur envoi de la clé de référencement utilisée par la passerelle.

La solution actuelle possède plusieurs limitations:

- les données de connexion peuvent être obtenues par envoi de requêtes successives utilisant des clés de référencement générées automatiquement, qu'elles soient extraites d'un dictionnaire ou prédites sur la base de clés de référencement allouées précédemment : il est donc possible que ces données de connexion soient obtenues de manière frauduleuse ;
- les données de connexion étant variables, la méthode par envoi de requêtes successives n'est pas adaptée car elle doit être réitérée à chaque mise à jour de données ; la méthode peut en outre être vouée à l'échec, lorsque les données de connexion ont été mises à jour pendant cette phase de mise à jour.

L'état de la technique est connu de par US2009144437 A1.

Il apparaît ainsi un besoin pour sécuriser le mode d'obtention de ces données de connexion afin qu'un tiers ne puisse pas les obtenir facilement, notamment pas par essais successifs.

Un des buts de l'invention est de remédier à des problèmes, inconvénients ou insuffisances de l'état de la technique et/ou d'y apporter des améliorations.

L'invention est définie par les revendications indépendantes. Des modes de réalisation préférés sont définis dans les revendications dépendantes.

L'invention concerne, selon un premier aspect, un procédé de gestion de données de connexion à un équipement via un réseau, le procédé comprenant :

- une étape de réception, par un serveur de référencement, en provenance de l'équipement, de données de connexion à cet équipement et d'au moins un jeton d'authentification constituant une donnée d'authentification de l'ensemble constitué par l'équipement et un utilisateur de l'équipement,
- une étape de référencement de l'équipement par le serveur de référencement par stockage des données de connexion reçues en association avec au moins une clé de référencement comprenant ledit au moins un jeton d'authentification.

Corrélativement, l'invention concerne un procédé d'obtention de données de connexion à un équipement via un réseau, le procédé étant mis en œuvre par un terminal et comprenant :

- une étape d'envoi, à un serveur de référencement de données de connexion, par le terminal, d'au moins une requête d'obtention de données de connexion, la requête comprenant une clé de référencement, la clé de référencement comprenant au moins un jeton d'authentification constituant une donnée d'authentification de l'ensemble constitué par l'équipement et un utilisateur de l'équipement,

- une étape de réception, en provenance du serveur de référencement de données de connexion, de données de connexion stockées en association avec la clé de référencement envoyée.

Selon l'invention un jeton d'authentification est utilisé : il constitue une partie de la clé de référencement utilisée pour référencer les données de connexion à stocker par le serveur de référencement et à obtenir par le terminal. Ainsi, seule la connaissance de ce jeton d'authentification permet d'obtenir des données de connexion enregistrées.

Ce jeton d'authentification constituant une donnée d'authentification de l'ensemble constitué par l'équipement et l'utilisateur, seul l'utilisateur ayant connaissance de la donnée d'authentification et de l'identifiant de l'équipement pourra obtenir les données de connexion à l'équipement.

Le terminal est adapté pour être connecté au serveur de référencement et obtenir de ce serveur de référencement les données de connexion.

Ainsi, dans un mode de réalisation, le procédé de gestion de données de connexion comprend

- une étape de réception par le serveur de référencement, en provenance d'un terminal, d'au moins une requête d'obtention de données de connexion comprenant une dite clé de référencement,
- une étape de transmission au terminal des données de connexion stockées en association avec la clé de référencement reçue.

Dans un mode de réalisation, ce jeton d'authentification est généré à partir d'un identifiant affecté audit équipement et d'au moins une donnée d'authentification d'un utilisateur de l'équipement et d'un identifiant de l'équipement. La génération de ce jeton peut être effectuée par différentes entités : par le terminal lors de la mise en œuvre du procédé d'obtention de données de connexion, par l'équipement avant envoi des données de connexion au serveur de référencement ou par une entité reliée au terminal et/ou à cet équipement.

Ainsi, dans un mode de réalisation, le procédé d'obtention de données de connexion comprend une étape de génération par le terminal d'au moins un jeton d'authentification à partir d'au moins un identifiant affecté à l'équipement et d'au moins une donnée d'authentification d'un utilisateur de l'équipement.

Dans un mode de réalisation, l'étape de référencement est effectuée sous condition d'authentification de l'équipement par le serveur de référencement.

Ceci garantit que les données de connexion reçues proviennent d'une source sûre et sont fiables. Il n'est en conséquence pas possible par un équipement non reconnu, non identifié et authentifié d'envoyer des données de connexion selon cette méthode.

Dans un mode de réalisation, le jeton d'authentification est obtenu par une opération de dérivation cryptographique appliquée à l'identifiant et à ladite au moins une donnée d'authentification.

L'opération de dérivation cryptographique permet de générer des données très difficilement reproductibles par essais successifs, sans la connaissance du jeton d'authentification ou des données de départ telles que l'identifiant de l'équipement et la donnée d'authentification. Ainsi, on garantit qu'il ne sera pas possible par un équipement n'ayant pas connaissance du jeton d'authentification d'obtenir par essais successifs des données de connexion.

Dans un mode de réalisation, le serveur de référence est un serveur de nom de domaine, la clé de référencement étant constituée par un nom de domaine dont le jeton d'authentification constitue un sous-domaine. Il est ainsi possible de faire appel à des mécanismes standard d'interrogation d'un serveur de nom de domaine sur la base d'un nom de domaine, tout en utilisant un jeton d'authentification qui sécurise le mécanisme d'obtention de données de connexion.

Dans un mode de réalisation, les données de connexion comprennent une adresse IP publique allouée à l'équipement et/ou un identifiant de port de communication ouvert sur l'équipement. La méthode est particulièrement bien applicable dans ce cas.

Dans un mode de réalisation, le jeton d'authentification est généré à partir en outre d'une donnée aléatoire générée pour un ensemble d'au moins un équipement. Ceci rend le jeton d'authentification encore plus difficile à reproduire, et ce sans avoir à imposer à l'utilisateur d'utiliser une donnée d'authentification complexe ou une chaîne alphanumérique longue, et donc difficile à retenir. Cette méthode reste simple à mettre en œuvre dans la mesure où la donnée aléatoire est générée une fois pour plusieurs équipements pour lequel le service d'obtention de données de connexion doit être disponible. En outre, cette donnée aléatoire n'a pas besoin d'être secrète.

En alternative, il est possible d'utiliser une donnée aléatoire propre à l'équipement.

Dans un mode de réalisation, le jeton d'authentification est une clé cryptographique, propre à l'ensemble composé de l'utilisateur et de l'équipement.

Chaque utilisateur peut ainsi disposer d'un mode d'obtention de données de connexion à l'équipement qui lui est propre. Il est notamment possible de gérer par cette méthode plusieurs utilisateurs qui souhaiteraient accéder à l'équipement en générant une clé cryptographique par utilisateur.

Dans un mode de réalisation, le jeton d'authentification est une clé cryptographique, représentative de l'identifiant affecté à l'équipement, de la donnée d'authentification de l'utilisateur et de la donnée aléatoire propre à l'équipement. Le jeton d'authentification constitue ainsi une donnée d'authentification forte de l'ensemble constitué par l'équipement et l'utilisateur.

Les différents modes de réalisation mentionnés ci-dessus sont combinables entre eux pour la mise en œuvre de l'invention.

Selon une implémentation, les différentes étapes du procédé de gestion selon l'invention sont mises en œuvre par un logiciel ou programme d'ordinateur.

L'invention concerne ainsi un logiciel ou programme, susceptible d'être exécuté par un ordinateur ou par un processeur de données, ce logiciel / programme comportant des instructions pour commander l'exécution des étapes d'un procédé de gestion de données de connexion. Ces instructions sont destinées à être stockées dans une mémoire d'un dispositif informatique, chargées puis exécutées par un processeur de ce dispositif informatique.

Ce logiciel / programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Le dispositif informatique peut être mis en œuvre par une ou plusieurs machines physiquement distinctes et présente globalement l'architecture d'un ordinateur, incluant des constituants d'une telle architecture: mémoire(s) de données, processeur(s), bus de communication, interface(s) matérielle(s) pour la connexion de ce dispositif informatique à un réseau ou un autre équipement, interface(s) utilisateur, etc.

L'invention concerne aussi un support d'informations lisible par un processeur de données, et comportant des instructions d'un programme tel que mentionné ci-dessus. Le support d'informations peut être n'importe quelle entité ou dispositif capable de stocker le programme.

Dans un mode de réalisation, les différentes étapes du procédé de gestion de données de connexion sont mises en œuvre par un serveur de référencement de données de connexion.

Ce serveur de référencement des moyens de mise en œuvre des étapes du procédé de gestion de données de connexion. Ces moyens sont des modules logiciels (software) et/ou matériels (hardware).

Dans cette optique, le terme "module" correspond dans ce document à un composant logiciel, à un composant matériel ou bien à un ensemble de composants matériels et/ou logiciels, apte à mettre en œuvre une fonction ou un ensemble de fonctions, selon ce qui est décrit ci-dessous pour le module concerné.

Le procédé de gestion est mis en œuvre par un serveur de référencement conçu pour référencer des données de connexion à au moins un équipement au moyen de clés de référencement.

L'invention concerne également un serveur de référencement de données de connexion comprenant :

- un module de réception, en provenance d'un dit équipement, de données de connexion à cet équipement et d'au moins un jeton constituant une donnée d'authentification de l'ensemble constitué par l'équipement et un utilisateur de l'équipement,
- un module de référencement de l'équipement conçu pour stocker les données de connexion reçues en association avec au moins une clé de référencement comprenant ledit au moins un jeton d'authentification.

Dans un mode de réalisation, le serveur de référencement comprenant en outre :

- un module de réception pour recevoir en provenance d'un terminal une requête d'obtention de données de connexion comprenant une dite clé de référencement,
- un module de transmission au terminal des données de connexion stockées en association avec la clé de référencement reçue.

L'invention concerne également un terminal conçu pour être connecté à un serveur de référencement de données de connexion selon l'invention, et émettre une requête d'obtention de données de connexion à un équipement via un réseau, ce terminal comprenant :

- un module d'envoi audit serveur d'au moins une requête d'obtention de données de connexion comprenant une clé de référencement, la clé de référencement comprenant au moins un jeton d'authentification constituant une donnée d'authentification de l'ensemble constitué par l'équipement et un utilisateur de l'équipement,
- un module de réception de données de connexion stockées en association avec la clé de référencement envoyée.

Dans un mode de réalisation le terminal comprend en outre un module de génération de jetons, adapté pour générer au moins un jeton d'authentification à partir d'un identifiant affecté à l'équipement et à partir d'au moins une donnée d'authentification d'un utilisateur de l'équipement.

L'invention concerne un équipement conçu pour être connecté à un serveur de référencement de données de connexion selon l'invention, comprenant :

- un module de génération d'au moins un jeton d'authentification constituant une donnée d'authentification de l'ensemble constitué par l'équipement et un utilisateur de l'équipement,
- un module de transmission, au serveur de référencement, d'au moins une requête de stockage de données de connexion en association avec au moins une clé de référencement comprenant ledit au moins un jeton d'authentification.

Dans un mode de réalisation l'équipement comprend en outre un module d'obtention d'un identifiant affecté à l'équipement et d'au moins une donnée d'authentification d'un utilisateur de l'équipement,
le module de génération de jeton d'authentification étant adapté pour générer ledit au moins un jeton d'authentification à partir de l'identifiant et de ladite au moins une donnée d'authentification.

Les avantages énoncés pour le procédé de gestion selon l'invention sont transposables directement au serveur de référencement, au terminal et à l'équipement selon l'invention.

D'autres buts, caractéristiques et avantages de l'invention apparaîtront à travers la description qui va suivre, donnée uniquement à titre d'exemple non limitatif, et faite par référence aux dessins annexés dans lesquels:

- la figure la représente de manière schématique un système de communication intégrant un serveur SDNS de référencement de données de connexion selon l'invention;
- la figure 1b représente de manière schématique les entités du système de communication de la figure la, dans une vue plus détaillée présentant leur principaux modules fonctionnels;
- la figure 2 représente un organigramme d'un mode de réalisation du procédé selon l'invention.

L'invention est décrite plus en détail dans le cadre de son application à la gestion de données de connexion à un équipement, qui est une passerelle GW d'accès à un réseau local (LAN, Local Area Network), interconnectant ce réseau local avec un réseau étendu (WAN, wide area network) conforme au protocole IP (Internet Protocol), tel que le réseau Internet.

Dans ce cadre, les données de connexion nécessaires à une connexion comprennent une adresse IP et un port de communication TCP (Transmission Control Protocol). Le serveur de référencement de telles données de connexion est dans ce cadre un serveur SDNS de noms de domaine (DNS, Domain Name Server), gérant des données de connexion comprenant une adresse IP et/ou un port de communication TCP mémorisées en association avec un nom de domaine.

Un terminal MT est un terminal qui a une interface de communication adaptée pour établir une liaison de communication, par exemple une liaison IP, au travers du réseau WAN. Dans l'exemple décrit ici, le terminal MT est un terminal mobile.

Le serveur SDNS de référencement est doté des moyens suivants:

- un module MEM de stockage, notamment une mémoire, pour le stockage d'instructions de programme conçues pour commander l'exécution des étapes d'un procédé de gestion de données de connexion;
- un module PROC de traitement de données, comprenant notamment un processeur de données, apte à exécuter les instructions de programme stockées afin de mettre en œuvre les étapes du procédé de gestion de données de connexion.

Lors de l'exécution du procédé de gestion de connexion pour l'équipement GW, le serveur SDNS de référencement met en œuvre plusieurs modules:

- un module INT1 de réception, en provenance dudit équipement, de données de connexion audit équipement et d'au moins un jeton d'authentification généré à partir d'un identifiant dudit équipement et d'au moins une donnée d'authentification d'un utilisateur dudit équipement ; ce module fait appel à une interface de communication du serveur SDNS de référencement pour la communication au travers au moins un réseau de communication WAN avec le ou les équipements à référencer ou référencés;
- un module REF de référencement, pour stocker les données de connexion reçues en association une clé de référencement, cette clé de référencement comprenant au moins un jeton d'authentification; ce module REF de référencement fait appel à une base de données DB pour le stockage des données de connexion et clés de référencement associées ;
- un module INT2 de réception et de transmission, pour recevoir en provenance du terminal ledit au moins un jeton d'authentification et pour transmettre audit terminal des données de connexion stockées en association avec ledit au moins un jeton d'authentification reçu ; ce module fait appel à une interface de communication du serveur SDNS de référencement pour la communication au travers au moins un réseau de communication avec le ou les terminaux émetteurs de requêtes d'obtention de données de connexion.

L'équipement pour lequel des données de connexion sont enregistrées est par exemple une passerelle GW d'un réseau local, conçu pour être connecté au travers du réseau étendu WAN au serveur SDNS de référencement de données de connexion tel que décrit ci-dessus.

L'équipement GW comprend :

- un module IDG d'obtention d'un identifiant affecté audit équipement et d'au moins une donnée d'authentification d'un utilisateur dudit équipement, par exemple une interface utilisateur pour demander à l'utilisateur de saisir la donnée d'authentification ; l'identifiant est lui stocké dans une mémoire de l'équipement, par exemple suite à une configuration effectuée par un opérateur de réseau mettant à disposition cet équipement et allouant le ou les identifiants à cet équipement ;
- un module GEN de génération d'au moins un jeton d'authentification à partir dudit identifiant et de ladite donnée d'authentification, par exemple un module logiciel de calcul de clé cryptographique ;
- un module TRS de transmission au serveur SDNS de référencement d'au moins une requête de stockage de données de connexion en association avec au moins une clé de référencement, comprenant le ou les jetons d'authentification générés par le module GEN.

Le terminal MT, conçu pour être connecté via une interface de communication au serveur SDNS de référencement de données de connexion et pour lequel une connexion est à établir avec l'équipement GW, est équipé d'une application logicielle LOG pour l'obtention des données de connexion et pour l'établissement d'une connexion avec l'équipement GW.

L'application logicielle LOG comprend notamment un module d'envoi et de réception, adapté pour :

- l'envoi au serveur SDNS de référencement d'au moins une requête d'obtention de données de connexion comprenant une clé de référencement, incluant au moins un jeton d'authentification généré à partir d'un identifiant affecté audit équipement et d'au moins une donnée d'authentification d'un utilisateur dudit équipement, et
- la réception en retour de données de connexion stockées en association avec la clé de référencement envoyée,
- l'établissement d'une connexion avec le l'équipement GW.

Dans un mode de réalisation, le terminal MT est également équipé d'un module GEN de génération d'au moins un jeton d'authentification à partir dudit identifiant et de ladite donnée d'authentification. Ce module est identique sur le plan fonctionnel à celui utilisé par l'équipement GW de sorte qu'à partir d'un même identifiant et de mêmes données d'authentification, un même jeton d'authentification sera généré. En alternative, le jeton d'authentification utilisé par le terminal MT sera généré par l'équipement GW puis transmis au terminal MT pour y être stocké, à un moment où le terminal MT est connecté dans le réseau local LAN géré par l'équipement.

Le terminal MT est également équipé d'un module IDT d'obtention de l'identifiant affecté à l'équipement et d'au moins une donnée d'authentification d'un utilisateur dudit équipement : par exemple une interface utilisateur de l'application logicielle pour demander à l'utilisateur de saisir cet identifiant et la donnée d'authentification.

La présente invention se situe dans le cadre où le serveur SDNS de référencement utilise une base de données DB (ou annuaire), alimentée par des requêtes de stockage de données de connexion en association avec une clé de référencement, au moyen de laquelle les données de connexion stockées peuvent être obtenues par interrogation du serveur de référencement.

Une telle clé de référencement est une donnée numérique stockée en association avec un jeu de données de connexion. Une telle clé de référencement sert à indexer, et donc retrouver un jeu de données de connexion dans la base de données DB. Ainsi, sur envoi d'une requête d'obtention de données de connexion comprenant une clé de référencement, le serveur SDNS de référencement recherche un jeu de données stocké en association avec la clé de référencement fournie.

Si la clé de référencement reçue ne se trouve pas dans la base de données DB, le serveur SDNS de référencement ne renvoie aucun jeu de données de connexion. Cela signifie que la clé de référencement reçue n'est pas valide.

A contrario, si la clé de référencement reçue se trouve bien dans la base de données DB, le serveur SDNS de référencement renvoie le jeu de données de connexion qui est stocké en association avec la clé de référencement. Cela signifie implicitement que la clé de référencement reçue est valide.

Lorsque la clé de référencement est suffisamment longue (par exemple codée sur un nombre d'octets au moins égal à 32 ou 64 ou plus), il devient difficile de retrouver par essais successifs une clé de référencement valide, correspondant à un enregistrement dans la base de données DB.

Afin que la ou les clés de référencement soient confidentielles et difficilement prédictibles par essais successifs, ces clés de référencement comprennent chacune un jeton d'authentification ou clé cryptographique. Il est dans ce but fait appel pour la génération de ces clés de référencement à une opération de dérivation cryptographique : de cette opération résulte une clé cryptographique, qui constitue une partie de la clé de référencement à utiliser pour le stockage des données de connexion dans le serveur SDNS de référencement.

Cette opération de dérivation cryptographique utilise comme donnée d'entrée au moins un identifiant ID1, ID2, ...IDn affecté à l'équipement GW. Cet identifiant est par exemple un numéro de téléphone VoIP (Voice over IP) affecté à l'équipement, ce numéro étant affecté par un opérateur de réseau à l'équipement et n'étant affecté simultanément à aucun autre équipement. Selon un autre exemple, cet identifiant est une adresse MAC de l'équipement GW.

Cet identifiant est propre à l'équipement GW. De la sorte, la clé cryptographique sera également propre à l'équipement GW. Ce qui signifie que la clé cryptographique sera unique, non utilisée / utilisable par un autre équipement.

Lorsque plusieurs numéros de téléphone ou identifiants sont affectés à l'équipement, et que chacun de ces numéros / identifiants identifie une connexion possible à cet équipement avec des données de connexion propres à cette connexion, une clé cryptographique - et donc une clé de référencement incluant cette clé cryptographique - sera générée pour chacun de ces identifiants, puis transmise avec les données de connexion associées afin de mettre à disposition via le serveur de référencement chacun des jeux de données de connexion.

Cette opération de dérivation cryptographique utilise en outre comme donnée d'entrée au moins une donnée d'authentification K1, K2, ...Kn d'un utilisateur de cet équipement, par exemple un mot de passe ou code secret connu de ce seul utilisateur. De la sorte, seul un utilisateur ayant connaissance de cette donnée d'authentification sera en mesure de requérir la génération de la clé cryptographique résultant de cette opération de dérivation, et donc d'obtenir les données de connexion par envoie d'une requête incluant cette clé cryptographique. Cette donnée doit donc être conservée secrète par l'utilisateur de l'équipement.

Afin de rendre encore plus difficile pour un fraudeur l'obtention d'une clé de référencement / clé cryptographique valide, l'opération de dérivation cryptographique utilise en outre comme donnée d'entrée une donnée aléatoire U_SALT, qui est un nombre généré aléatoirement et stocké dans l'équipement, par exemple avant sa mise en fonction chez l'utilisateur.

Compte tenu de la manière dont elle est générée, la clé cryptographique sert de jeton d'authentification de l'équipement GW et de l'utilisateur de cet équipement ayant fourni la donnée d'authentification.

Les fonctions mathématiques utilisées sont maintenant décrites plus en détail. On note :

- ID1, ID2, ...IDn les identifiants affectés à l'équipement, par exemple un numéro de téléphone VoIP, ID1 = 0145294444 ou encore une adresse MAC; chacun de ces identifiant correspond une interface de connexion de l'équipement GW à laquelle il est possible de se connecter via un réseau étendu et/ou public tel que le réseau Internet et pour laquelle un jeu de données de connexion peut être obtenu par la méthode décrite dans ce document ;
- K1, K2, ...Kn, la ou les données d'authentification d'un utilisateur ; par exemple K1= PWD1234*box ;
- U_SALT, la donnée aléatoire, par exemple une succession d'un nombre prédéterminé d'octets, par exemple la séquence d'octets correspondant à la séquence alphanumérique suivante: FljdkflsjgY9f2jsgkljglsjfsjkgslkrMrcPYhzu65656BZkG3rr;
- ITER_NB, un nombre entier représentant un nombre d'itérations, par exemple égal à 2000
- OSIZE, la taille en nombre d'octets de la clé cryptographique à générer, par exemple égal à 128 ;
- DKEY1, DKEY2, ....DKEYn est la clé cryptographique générée respectivement pour ID1, ID2, ...IDn

Une ou plusieurs données d'authentification K1, K2, ...Kn de l'utilisateur peuvent être utilisées. Lorsqu'une seule donnée est disponible la donnée d'authentification KA utilisée pour l'opération de dérivation cryptographique est cette donnée d'authentification. Si plusieurs données d'authentification K1, K2, ...Kn sont disponibles, la donnée d'authentification KA utilisée pour l'opération de dérivation cryptographique est une combinaison de ces données d'authentification, par exemple une combinaison par une opération logique telle que « OU » notée « | », ou une fonction de concaténation d'octets:

$$KA= K1 \mid K2....\mid Kn$$

ou selon toute autre fonction de combinaison permettant d'aboutir à une séquence d'octets.

L'algorithme mathématique de génération de la clé cryptographique est appliqué à chaque identifiant ID1, ID2...IDn de la même manière. L'exemple ci-dessous décrit le cas de l'identifiant ID1.

Dans un premier temps, une donnée aléatoire dérivée D_SALT1 est générée par application d'une fonction de hachage HASH à une opération de combinaison de l'identifiant ID1 avec la donnée aléatoire U_SALT, soit:

$$D_SALT1 = HASH( ID1 \mid U_SALT).$$

cette opération de combinaison étant par exemple une opération de concaténation des octets de la représentation binaire de ID1 et U_SALT.

La fonction de hachage est par exemple la fonction SHA-256, Secure Hash Algorithm, opérant sur une taille de mot de 32 bits, définie dans le document FIPS 180-2 (Federal Information Processing Standard).

La donnée aléatoire dérivée D_SALT1 ainsi que la donnée d'authentification KA est ensuite utilisée comme donnée d'entrée d'une fonction de dérivation cryptographique, en l'occurrence la fonction PBKDF2, pour « Password-Based Key Dérivation Function 2 » définie dans le document RFC 2898, fourni par l'IETF et disponible à l'adresse http://tools.ietf.org/html/rfc2898. On obtient ainsi la clé cryptographique DKEY1 suivante :

$$DKEY1 = PBKDF2 (PRF, KA, D_SALT1, ITER_NB, OSIZE),$$

où PRF est une fonction pseudo-aléatoire définie dans le même document. Dans l'exemple décrit ici PRF est la fonction HMAC-SHA1 (HMAC, keyed-hash message authentication code et SHA-1, Secure Hash Algorithm).

De la même manière, on peut obtenir une clé cryptographique DKEY2 pour l'identifiant ID2 :

$$DKEY2 = PBKDF2 (PRF, KA, D_SALT2, ITER_NB, OSIZE).$$

avec

$$D_SALT2= HASH ( ID2 \mid U_SALT).$$

Compte tenu de la manière dont elle est générée, les valeurs possibles de la clé cryptographique présentent une entropie telle, notamment par rapport au nombre d'équipements GW à gérer, que le risque que deux équipements GW et leurs utilisateurs associés aboutissent à la génération d'un même jeton d'authentification est très faible, quasi impossible. La clé cryptographique sert donc de jeton d'authentification d'un ensemble constitué par l'équipement GW et l'utilisateur de cet équipement ayant fourni la donnée d'authentification K1 ou K2 ou Kn.

Le déroulement du procédé de gestion de données d'identification (étapes E200 à E230) mis en œuvre par l'équipement GW et le serveur SDNS de référencement ainsi que le déroulement du procédé d'obtention de données de connexion (Etapes E240 à E290) mis en œuvre par le terminal MT et le serveur SDNS de référencement sont décrits par référence à la figure 2. Les étapes E200 à E230 sont répétées à chaque mise à jour des données de connexion de l'équipement GW. Les étapes E240 à E290 sont répétées à chaque fois que le terminal MT a besoin de se connecter à l'équipement GW et d'obtenir des données de connexion.

Lors d'une étape E200 d'initialisation, le ou les identifiants affectés à l'équipement GW sont stockés dans une mémoire de cet équipement GW ainsi que la donnée aléatoire U_SALT. Cette première étape a lieu à l'initialisation de l'équipement, avant ou après sa mise en place dans le réseau local LAN dont cet équipement forme la passerelle d'accès.

Ces données sont par exemple transmises via une liaison dédiée, établie au travers du réseau Internet avec l'équipement GW, par un serveur de gestion de passerelles, en charge de la mise à jour et de la configuration d'un ensemble de passerelles fournies par un opérateur de réseau. Cet opérateur de réseau est typiquement un fournisseur d'accès au réseau Internet, cet équipement GW formant une passerelle d'accès à Internet à partir du réseau local dans lequel se trouve cette passerelle.

Lors de l'étape E200 d'initialisation, l'équipement GW obtient en outre la ou les données d'authentification de l'utilisateur et les stocke en mémoire.

Ces données d'authentification peuvent être mises à jour par l'utilisateur quand il le souhaite ou périodiquement sur sollicitation de l'équipement GW. Une interface web est par exemple proposée à l'utilisateur pour lui permettre la saisie de ces données d'authentification.

Lors d'une étape E210, L'équipement GW génère pour chaque identifiant ID1, ...IDn une clé cryptographique DKEY1, ...DKEYn associée. L'équipement GW utilise la méthode de génération de clé cryptographique décrite plus haut.

Cette étape de génération de clé cryptographique est effectuée à chaque fois que les données de connexion de l'équipement sont mises à jour ou que l'une des données servant à la génération de la clé cryptographique est modifiée, notamment :

- au démarrage de l'équipement, lorsque l'interface de communication avec le réseau étendu est activée ;

- en cas de modification des données de connexion après démarrage de l'équipement, notamment lorsque le port TCP ouvert ou l'adresse IP change ;
- en cas de mise à jour des données d'authentification par l'utilisateur ou de mise à jour de la donnée aléatoire U_SALT par l'opérateur de réseau en charge de la configuration de l'équipement;
- en cas de mise à jour / changement de l'un des identifiants ID1, ID2, ...IDn.

L'équipement GW doit dans tous ces cas envoyer (voir étape E220 ci-dessous) au serveur de référencement une clé cryptographique courante en association avec les données de connexion courantes pour mise à jour de la base de données DB.

Lors d'une étape E220, l'équipement GW transmet au serveur SDNS de référencement une requête de stockage d'un jeu de données de connexion, comprenant la ou les clés de cryptographiques générées à l'étape E210, pour le stockage de ces données de connexion.

Pour cela, l'équipement GW établit une connexion HTTP (Hypertexte transport protocol) avec le serveur SDNS de référencement. L'équipement envoie vers le serveur SDNS de référencement une requête de stockage de données de connexion comprenant la ou les clés cryptographiques générées ainsi qu'un jeu de données de connexion à stocker.

Cette requête est par exemple sous forme d'une requête HTTP, en utilisant une URL (Uniform Resource Locator) qui est par exemple composée comme suit :

[DYNAMIC_DNS_SERVER]?login=[DKEY]&port=[CPORT]&ip=[CIP]

Où :

- [DYNAMIC_DNS_SERVER] est l'URL du domaine web du serveur SDNS de référencement
- [DKEY] est la liste des clés cryptographiques générées à l'étape E210, cette liste étant constituée par une chaîne de caractères constituée par la juxtaposition ou concaténation de chaînes de caractères alphanumérique représentant les différentes clés cryptographiques générées à l'étape E210, ces différentes clés cryptographiques étant séparées par un caractère de séparation prédéfini (espace, tiret, ou autre caractère admissible) ;
- [C_PORT] est le numéro du port TCP ouvert sur l'équipement pour une connexion à partir du réseau étendu WAN;
- [C_IP] est l'adresse IP de l'équipement pour une connexion à partir du réseau étendu WAN, c'est-à-dire son adresse publique.

A réception d'une telle requête de stockage, le serveur SDNS de référencement stocke lors de l'étape E230 dans la base de données DB un jeu de données de connexion reçu en association avec une clé de référencement.

Dans ce but, pour une ou plusieurs clés cryptographiques le serveur SDNS de référencement génère au moins une clé de référencement pour le stockage des données de connexion reçues avec cette clé cryptographique. Une dite clé de référencement est générée par combinaison d'un nom de domaine affecté à l'équipement GW identifié, avec la représentation alphanumérique de la clé cryptographique. Ainsi, un nom de domaine "pleinement qualifié" (FQDN, Fully qualified domain name) comprenant, en tant que sous domaine, une clé cryptographique générée, est généré par l'équipement.

La clé de référencement générée pour la clé cryptographique DKEY1 est par exemple :

<DKEY1>.livebox.orange.fr
ou
livebox.<DKEY1>.orange.fr

Dans une alternative, c'est l'équipement GW qui génère la clé de référencement: dans cette alternative, l'équipement envoie au serveur SDNS de référencement les données de connexion avec une clé de référencement incluant au moins une des clés cryptographiques générées par cet équipement GW.

Quelle que soit l'alternative choisie, les jeux de données de connexion sont stockés dans base de données DB en association avec une clé de référencement, qui a par exemple la forme suivante, dans le cas où la liste des clés cryptographiques DKEY contient 2 clés cryptographiques DKEY1 et DKEY2 :

| Nom de domaine (FQDN) | Type | Données de connexion |
|---|---|---|
| <DKEY1>.livebox.orange.fr | A | <@IP> |
| <DKEY2>.livebox.orange.fr | A | <@IP> |

(suite)

| Nom de domaine (FQDN) | Type | Données de connexion |
|---|---|---|
| web_api._tcp.< DKEY1>.livebox.orange.fr | SRV | 0 0 <port TCP> |
| web_api._tcp.<DKEY2>.livebox.orange.fr | SRV | 0 0 <port TCP> |

Où

- le nom de domaine enregistré est un nom de domaine dit "pleinement qualifié" (FQDN, Fully qualified domain name), dont une partie (« livebox.orange.fr » et/ou «Web_api._tcp » ) est préconfigurée, c'est-à-dire que cette partie de nom de domaine est enregistrée lors d'une étape initiale de configuration (par exemple, lors de l'étape 200) dans l'équipement GW et/ou dans le serveur SDNS de référencement, ainsi que dans le terminal MT (par exemple dans le code exécutable de l'application logicielle LOG) ; cette convention de configuration est partagée pour tous les équipements et terminaux qui font appel au service d'obtention de données de connexion décrit ici, de manière à ce que, chaque équipement qui enregistre des données de connexion utilise un nom de domaine FQDN structurée de la même manière que le nom de domaine utilisé par le ou les terminaux qui vont demander à obtenir ces données de connexion ;
- <@IP> est une adresse IP allouée à l'équipement, disponible sur présentation de DKEY1 ou DKEY2;
- <port TCP> est un port TCP ouvert sur l'équipement, disponible sur présentation de DKEY1 ou DKEY2 ;
- « A » représente le champ éponyme du protocole DNS et indique le type d'enregistrement ; ce type d'enregistrement « A » signifiant que l'on demande la résolution directe du nom de domaine vers l'adresse IP : le serveur SDNS de référencement renverra alors directement l'adresse IP sur réception d'une requête d'obtention de données de connexion contenant du nom de domaine enregistré en association ;
- « SRV" représente le champ éponyme du protocole DNS et indique le type d'enregistrement ; ce type d'enregistrement « SRV » signifie que l'on demande la résolution directe du nom de domaine vers le port TCP : le serveur SDNS de référencement renverra alors directement le numéro de port TCP sur réception d'une requête d'obtention de données de connexion contenant du nom de domaine enregistré en association.

Lorsque plusieurs jeux de données de connexion différents sont utilisables pour se connecter sur l'équipement GW, par exemple si plusieurs ports TCP différents sont ouverts, chacun pour un utilisateur différent, plusieurs requêtes de stockage sont envoyées par l'équipement GW et plusieurs jeux de données de connexion sont enregistrés. Dans l'exemple ci-dessous, on suppose ainsi qu'un premier jeu de données de connexion est associé à la clé DKEY1 et un autre à la clé DKEY12 :

| Nom de domaine (FQDN) | Type | Données de connexion |
|---|---|---|
| <DKEY1>.livebox.orange.fr | A | <@IP> |
| <DKEY2>.livebox.orange.fr | A | <@IP> |
| web_api._tcp.<DKEY1>.livebox.orange.fr | SRV | 0 0 <port TCP 1> |
| web_api._tcp.<DKEY2>.livebox.orange.fr | SRV | 0 0 <port TCP 2> |

Dans le cas d'un serveur SDNS de référencement qui est un serveur de nom de domaine, il est à noter qu'une partie du nom de domaine FQDN, en l'occurrence un sous-domaine, est constituée par la clé cryptographique, c'est-à-dire par le jeton d'authentification de l'équipement GW et de l'utilisateur. Cette mesure permet d'utiliser le protocole DNS d'interrogation du serveur SDNS de référencement sans modification tout en rendant très difficile l'obtention d'un jeu de données de connexion en l'absence de la connaissance de la clé de référencement, et plus particulièrement, de la clé cryptographique: à réception du nom de domaine incluant la clé de référencement, le serveur SDNS de référencement sait retrouver sans ambiguïté le jeu de données de connexion associé.

Afin de sécuriser la transmission des données de connexion et d'éviter l'interception de ces données de connexion lors de leur transmission au serveur SDNS de référencement, une connexion sécurisée, par exemple HTTPS sera utilisée en lieu et place d'une connexion HTTP. Une authentification préalable de l'équipement GW par le serveur SDNS de référencement aura lieu avant d'accepter les requêtes de mises à jour de la base de données base de données DB. Dans ce but, l'équipement GW utilise un certificat numérique privé qui lui est propre, délivré par exemple par l'opérateur de réseau en charge de la configuration de l'équipement ou une autorité de certification. Ce certificat doit être fourni par l'équipement au serveur SDNS de référencement pour l'authentification auprès du serveur SDNS de référencement.

L'étape de stockage E230 des données de connexion est alors effectuée sous condition d'authentification de l'équipement par le serveur de référencement.

Lors d'une étape E240, un utilisateur qui souhaite obtenir les données de connexion à l'équipement GW déclenche l'exécution de l'application logicielle LOG sur le terminal MT.

Lors d'une étape E250, l'application logicielle LOG du terminal MT obtient le ou les identifiants affectés à l'équipement, correspondant à une interface de connexion de l'équipement GW à laquelle l'utilisateur souhaite se connecter ainsi que la ou les données d'authentification de l'utilisateur, par exemple en présentant à l'utilisateur une interface utilisateur pour demander à l'utilisateur de saisir la ou les identifiants et la donnée d'authentification. Puis l'application logicielle du terminal MT stocke l'ensemble de ces données en mémoire.

Lors d'une étape E260, l'application logicielle du terminal MT génère alors, pour chacun des identifiants ID1, ID2, etc obtenus, une clé cryptographique DKEY1, DKEY2, etc en utilisant la même fonction de génération de clé cryptographique que l'équipement.

Puis, pour au moins une clé cryptographique, le terminal MT génère une clé de référencement par combinaison d'un nom de domaine affecté à l'équipement GW, avec la représentation alphanumérique de la clé cryptographique. Le terminal MT utilise ici la même convention de génération de la clé de référencement que l'équipement GW et/ou que le serveur SDNS de référencement.

Lors d'une étape E270, l'application logicielle du terminal MT établit une connexion HTTP (Hypertexte transport protocol), éventuellement sécurisée HTTPS, avec le serveur SDNS de référencement. Le terminal MT envoie vers le serveur SDNS de référencement au moins une requête d'obtention de données de connexion incluant au moins une des clés de référencement générées. Cette requête est par exemple sous forme d'une requête conforme au protocole DNS, décrit notamment dans les documents RFC 1034 et 1035.

Sur la base de l'exemple donné plus haut, le terminal MT envoie le nom de domaine FQDN <DKEY1>.livebox.orange.fr et le type «A» pour obtenir l'adresse IP stockée en association avec ce nom de domaine. De même, le terminal MT envoie le nom de domaine FQDN web_api._tcp.<DKEYl>.livebox.orange.fr et le type « SRV » pour obtenir le numéro de port TCP stocké en association avec ce nom de domaine.

Ce même utilisateur, ou un autre utilisateur du même équipement GW, utilisateur du même terminal MT ou utilisateur d'un autre terminal équipé de la même application logicielle LOG que le terminal peut obtenir

- l'adresse IP stockée en association avec le nom de domaine <DKEY2>.livebox.orange.fr en envoyant ce nom de domaine et le type « A » ;
- le numéro de port TCP stocké en association avec le nom de domaine web_api._tcp.<DKEY2>.livebox.orange.fr en envoyant ce nom de domaine et le type « SRV ».

Lors d'une étape E280, le serveur SDNS de référencement recherche dans la base de données DB s'il existe au moins un enregistrement indexé avec l'une de ces clés de référencement.

Dans l'affirmative, le serveur SDNS de référencement envoie, en réponse à la requête de d'obtention de données de connexion, le ou les jeux de données de connexion trouvés dans la base de données DB.

Dans la négative, le serveur SDNS de référencement envoie en réponse à la requête de d'obtention de données de connexion en indiquant que la ou les clé de référencement fournies ne sont pas valides et/ou qu'aucun jeu de données de connexion n'est disponible.

Lors d'une étape E290, l'application logicielle LOG du terminal MT utilise les données de connexion obtenues à l'étape E280 et établit une connexion avec l'équipement GW au moyen de ces données de connexion.

La méthode de connexion à l'équipement GW qui vient d'être décrite est simple et applicable à tout type d'équipement et de données de connexion.

En outre, pour interdire l'accès à l'équipement GW depuis le réseau étendu via une connexion, il suffit d'envoyer une requête au serveur de référencement pour supprimer de la base de données DB les données de connexion correspondantes.

La méthode de connexion à l'équipement GW permet de gérer le cas de plusieurs utilisateurs différents accédant à un même équipement GW tout en conservant un haut degré de sécurité. Il est notamment possible de communiquer des jeux de données de connexion différents à des utilisateurs différents, et de contrôler ainsi quel utilisateur va se connecter avec quel jeu de données de connexion.

## Revendications

1. **Procédé** de gestion de données de connexion à un équipement (GW) via un réseau, le procédé comprenant :

- une étape de réception, par un serveur (SDNS) de référencement, en provenance dudit équipement, de données de connexion audit équipement et d'au moins un jeton d'authentification constituant une donnée d'authentification de l'ensemble constitué par l'équipement et un utilisateur dudit équipement ;
- une étape de référencement dudit équipement par le serveur de référencement par stockage, dans une base de données (DB), des données de connexion reçues en association avec au moins une clé de référencement générée par le serveur, la clé de référencement comprenant ledit au moins un jeton d'authentification ;
- une étape de réception par le serveur, en provenance d'un terminal (MT), d'au moins une requête d'obtention de données de connexion comprenant ladite clé de référencement, ladite clé de référencement comprenant le jeton d'authentification générée par le terminal ;
- une étape de transmission audit terminal des données de connexion stockées en association avec la clé de référencement reçue, si la clé de référencement reçue se trouve dans la base de données,

le serveur de référencement étant un serveur de nom de domaine, la clé de référencement étant constituée par un nom de domaine dont ledit jeton d'authentification constitue un sous-domaine, une partie du nom de domaine étant enregistrée dans l'équipement, dans le serveur de référencement et dans le terminal lors d'une étape initiale de configuration.

**2.** Procédé selon la revendication 1 dans lequel le jeton d'authentification est généré à partir d'au moins un identifiant affecté audit équipement et à partir d'au moins une donnée d'authentification d'un utilisateur dudit équipement.

**3.** Procédé selon l'une quelconque des revendications précédentes dans lequel l'étape de référencement est effectuée sous condition d'authentification dudit équipement par le serveur de référencement.

**4.** Procédé selon la revendication 2 dans lequel le jeton d'authentification est obtenu par une opération de dérivation cryptographique appliquée audit identifiant et à ladite au moins une donnée d'authentification.

**5.** Procédé selon la revendication 2 ou 4 dans lequel le jeton d'authentification est généré à partir en outre d'une donnée aléatoire générée pour un ensemble d'au moins un équipement.

**6.** Procédé selon l'une quelconque des revendications précédentes dans lequel le jeton d'authentification est une clé cryptographique, propre à l'ensemble composé de l'utilisateur et dudit équipement.

**7.** Procédé selon la revendication 5 dans lequel le jeton d'authentification est une clé cryptographique, représentative de l'identifiant affecté à l'équipement, de la donnée d'authentification de l'utilisateur et de la donnée aléatoire propre à l'équipement.

**8.** **Programme** informatique comprenant des instructions logicielles pour la mise en oeuvre d'un procédé selon l'une des revendications précédentes lorsque ledit programme est exécuté par un processeur de données d'un serveur de référencement.

**9.** **Support** d'enregistrement lisible par un processeur de données d'un serveur de référencement sur lequel est enregistré un programme comprenant des instructions de code de programme pour l'exécution des étapes d'un procédé selon l'une des revendications 1 à 7.

**10.** **Serveur** de référencement de données de connexion à au moins un équipement comprenant :

- un module de réception, en provenance d'un dit équipement, de données de connexion audit équipement et d'au moins un jeton d'authentification constituant une donnée d'authentification de l'ensemble constitué par l'équipement et un utilisateur dudit équipement ;
- un module de référencement dudit équipement conçu pour stocker, dans une base de données, les données de connexion reçues en association avec au moins une clé de référencement générée par le serveur, la clé de référencement comprenant ledit au moins un jeton d'authentification ;
- un module de réception pour recevoir en provenance d'un terminal une requête d'obtention de données de connexion comprenant ladite clé de référencement, ladite clé de référencement comprenant le jeton d'authentification générée par le terminal ;
- un module de transmission audit terminal des données de connexion stockées en association avec la clé de référencement reçue, si la clé de référencement reçue se trouve dans la base de données,

le serveur de référencement étant un serveur de nom de domaine, la clé de référencement étant constituée par un nom de domaine dont ledit jeton d'authentification constitue un sous-domaine, une partie du nom de domaine étant enregistrée dans l'équipement, dans le serveur de référencement et dans le terminal lors d'une étape initiale de configuration.

11. **Terminal** conçu pour être connecté à un serveur de référencement de données de connexion et émettre une requête d'obtention de données de connexion à un équipement via un réseau, comprenant :

    - un module d'envoi audit serveur d'au moins une requête d'obtention de données de connexion comprenant une clé de référencement, la clé de référencement comprenant au moins un jeton d'authentification constituant une donnée d'authentification de l'ensemble constitué par l'équipement et un utilisateur dudit équipement,
    - un module de réception dudit serveur de données de connexion stockées en association avec la clé de référencement envoyée, et
    - une interface de communication adaptée pour établir une liaison de communication avec l'équipement via le réseau si la clé de référencement envoyée se trouve dans la base de données;

    le terminal comprenant en outre un module de génération de jeton d'authentification adapté pour générer ledit jeton d'authentification à partir d'un identifiant affecté audit équipement et à partir d'au moins une donnée d'authentification d'un utilisateur dudit équipement,
    le serveur de référencement étant un serveur de nom de domaine, la clé de référencement étant constituée par un nom de domaine dont ledit jeton d'authentification constitue un sous-domaine, une partie du nom de domaine étant enregistrée dans l'équipement, dans le serveur de référencement et dans le terminal lors d'une étape initiale de configuration.

12. **Système** comprenant un serveur de référencement de données de connexion selon la revendication 10 et un équipement conçu pour être connecté à un serveur de référencement de données de connexion, l'équipement comprenant en outre :

    - un module de génération de l'au moins un jeton d'authentification,
    - un module de transmission audit serveur de référencement d'au moins une requête de stockage de données de connexion en association avec au moins une clé de référencement comprenant ledit au moins un jeton d'authentification, et
    - une interface de connexion pour connecter l'équipement à un terminal via le réseau à partir des données de connexion obtenues par le terminal ;

    l'équipement comprenant en outre un module d'obtention d'un identifiant affecté audit équipement et d'au moins une donnée d'authentification d'un utilisateur dudit équipement, le module de génération de jeton d'authentification étant adapté pour générer ledit jeton d'authentification à partir dudit identifiant et de ladite au moins une donnée d'authentification.

13. **Procédé** d'obtention de données de connexion à un équipement via un réseau, le procédé étant mis en oeuvre par un terminal et comprenant :

    - une étape d'envoi, à un serveur de référencement de données de connexion, par le terminal, d'au moins une requête d'obtention de données de connexion comprenant une clé de référencement, la clé de référencement comprenant au moins un jeton d'authentification constituant une donnée d'authentification de l'ensemble constitué par l'équipement et un utilisateur dudit équipement,
    - une étape de réception, en provenance du serveur de référencement de données de connexion, de données de connexion stockées, dans une base de données, en association avec la clé de référencement envoyée, et
    - une étape de communication des données de connexion reçues, adaptée pour établir une liaison avec l'équipement via le réseau si la clé de référencement envoyée se trouve dans la base de données ;

    le procédé comprenant en outre une étape de génération dudit au moins un jeton d'authentification à partir d'au moins un identifiant affecté audit équipement et d'au moins une donnée d'authentification d'un utilisateur dudit équipement,
    le serveur de référencement étant un serveur de nom de domaine, la clé de référencement étant constituée par un nom de domaine dont ledit jeton d'authentification constitue un sous-domaine, une partie du nom de domaine étant enregistrée dans l'équipement, dans le serveur de référencement et dans le terminal lors d'une étape initiale de configuration.

## Patentansprüche

1. Verfahren zur Verwaltung von Daten zur Verbindung mit einer Ausrüstung (GW) über ein Netzwerk, das Verfahren umfassend:

   - einen Schritt des Empfangens, durch einen Referenzierungsserver (SDNS), von der Ausrüstung, von Daten zur Verbindung mit der Ausrüstung und mindestens eines Authentifizierungstokens, der ein Authentifizierungsdatenelement der Menge bildet, die von der Ausrüstung und einem Benutzer der Ausrüstung gebildet wird;
   - einen Schritt des Referenzierens der Ausrüstung durch den Referenzierungsserver durch Speicherung, in einer Datenbank (DB), der empfangenen Verbindungsdaten in Verbindung mit mindestens einem Referenzierungsschlüssel, der vom Server erzeugt wird, wobei der Referenzierungsschlüssel den mindestens einen Authentifizierungstoken umfasst;
   - einen Schritt des Empfangens, durch den Server, von einem Endgerät (MT), mindestens einer Anforderung zum Erhalt von Verbindungsdaten, die den Referenzierungsschlüssel umfasst, wobei der Referenzierungsschlüssel den Authentifizierungstoken umfasst, der vom Endgerät erzeugt wird;
   - einen Schritt des Übertragens, an das Endgerät, der Verbindungsdaten, die in Verbindung mit dem empfangenen Referenzierungsschlüssel gespeichert sind, wenn sich der empfangene Referenzierungsschlüssel in der Datenbank befindet,

   wobei der Referenzierungsserver ein Domainnamenserver ist, wobei der Referenzierungsschlüssel von einem Domainnamen gebildet wird, wovon der Authentifizierungstoken eine Subdomain bildet, wobei ein Abschnitt des Domainnamens in der Ausrüstung, im Referenzierungsserver und im Endgerät bei einem Erstkonfigurationsschritt abgespeichert wird.

2. Verfahren nach Anspruch 1, wobei der Authentifizierungstoken anhand mindestens einer Kennung, die der Ausrüstung zugewiesen ist, und anhand mindestens eines Authentifizierungsdatenelements eines Benutzers der Ausrüstung erzeugt wird.

3. Verfahren nach einem der vorhergehenden Ansprüche, wobei der Schritt des Referenzierens unter der Bedingung der Authentifizierung der Ausrüstung durch den Referenzierungsserver durchgeführt wird.

4. Verfahren nach Anspruch 2, wobei der Authentifizierungstoken durch eine Operation einer kryptographischen Ableitung erhalten wird, die auf die Kennung und das mindestens eine Authentifizierungsdatenelement angewandt wird.

5. Verfahren nach Anspruch 2 oder 4, wobei der Authentifizierungstoken ferner anhand eines zufälligen Datenelements erzeugt wird, das für eine Menge mindestens einer Ausrüstung erzeugt wird.

6. Verfahren nach einem der vorhergehenden Ansprüche, wobei der Authentifizierungstoken ein kryptographischer Schlüssel ist, der der Menge eigen ist, die vom Benutzer und der Ausrüstung gebildet wird.

7. Verfahren nach Anspruch 5, wobei der Authentifizierungstoken ein kryptographischer Schlüssel ist, der für die Kennung, die der Ausrüstung zugewiesen ist, das Authentifizierungsdatenelement des Benutzers und das zufällige Datenelement, das der Ausrüstung eigen ist, repräsentativ ist.

8. Computerprogramm umfassend Softwareanweisungen für die Umsetzung eines Verfahrens nach einem der vorhergehenden Ansprüche, wenn das Programm von einem Datenprozessor eines Referenzierungsservers ausgeführt wird.

9. Speichermedium, das von einem Datenprozessor eines Referenzierungsservers gelesen werden kann, auf dem ein Programm gespeichert ist, das Programmcode-Anweisungen für die Ausführung der Schritte eines Verfahrens nach einem der Ansprüche 1 bis 7 umfasst.

10. Server zur Referenzierung von Daten zur Verbindung mit mindestens einer Ausrüstung, umfassend:

    - ein Modul zum Empfangen, von einer Ausrüstung, von Daten zur Verbindung mit der Ausrüstung und mindestens eines Authentifizierungstokens, der ein Authentifizierungsdatenelement der Menge bildet, die von der Ausrüstung und einem Benutzer der Ausrüstung gebildet wird;
- ein Modul zum Referenzieren der Ausrüstung, das ausgelegt ist, in einer Datenbank die empfangenen Verbindungsdaten in Verbindung mit mindestens einem Referenzierungsschlüssel zu speichern, der vom Server erzeugt wird, wobei der Referenzierungsschlüssel den mindestens einen Authentifizierungstoken umfasst;
- ein Empfangsmodul zum Empfangen, von einem Endgerät, einer Anforderung zum Erhalt von Verbindungsdaten, die den Referenzierungsschlüssel umfasst, wobei der Referenzierungsschlüssel den Authentifizierungstoken umfasst, der vom Endgerät erzeugt wird;
- ein Modul zum Übertragen, an das Endgerät, der Verbindungsdaten, die in Verbindung mit dem empfangenen Referenzierungsschlüssel gespeichert sind, wenn sich der empfangene Referenzierungsschlüssel in der Datenbank befindet,

wobei der Referenzierungsserver ein Domainnamenserver ist, wobei der Referenzierungsschlüssel von einem Domainnamen gebildet wird, wovon der Authentifizierungstoken eine Subdomain bildet, wobei ein Abschnitt des Domainnamens in der Ausrüstung, im Referenzierungsserver und im Endgerät bei einem Erstkonfigurationsschritt abgespeichert wird.

**11.** Endgerät, das dafür ausgelegt ist, mit einem Server zur Referenzierung von Verbindungsdaten verbunden zu sein und eine Anforderung zum Erhalt von Daten zur Verbindung mit einer Ausrüstung über ein Netzwerk zu senden, umfassend:

- ein Modul zum Senden, an den Server, mindestens einer Anforderung zum Erhalt von Verbindungsdaten, die einen Referenzierungsschlüssel umfasst, wobei der Referenzierungsschlüssel mindestens einen Authentifizierungstoken umfasst, der ein Authentifizierungsdatenelement der Menge bildet, die von der Ausrüstung und einem Benutzer der Ausrüstung gebildet wird,
- ein Modul zum Empfangen, vom Server, von Verbindungsdaten, die in Verbindung mit dem gesendeten Referenzierungsschlüssel gespeichert sind, und
- eine Kommunikationsschnittstelle, die geeignet ist, eine Kommunikationsverbindung mit der Ausrüstung über das Netzwerk herzustellen, wenn sich der gesendete Referenzierungsschlüssel in der Datenbank befindet; wobei das Endgerät ferner ein Authentifizierungstoken-Erzeugungsmodul umfasst, das geeignet ist, den Authentifizierungstoken anhand einer Kennung, die der Ausrüstung zugewiesen ist, und anhand mindestens eines Authentifizierungsdatenelements eines Benutzers der Ausrüstung zu erzeugen,

wobei der Referenzierungsserver ein Domainnamenserver ist, wobei der Referenzierungsschlüssel von einem Domainnamen gebildet wird, wovon der Authentifizierungstoken eine Subdomain bildet, wobei ein Abschnitt des Domainnamens in der Ausrüstung, im Referenzierungsserver und im Endgerät bei einem Erstkonfigurationsschritt abgespeichert wird.

**12.** System umfassend einen Server zur Referenzierung von Verbindungsdaten nach Anspruch 10 und eine Ausrüstung, die dafür ausgelegt ist, mit einem Server zur Referenzierung von Verbindungsdaten verbunden zu sein, wobei die Ausrüstung ferner Folgendes umfasst:

- ein Modul zum Erzeugen des mindestens einen Authentifizierungstokens,
- ein Modul zum Übertragen, an den Referenzierungsserver, mindestens einer Anforderung zur Speicherung von Verbindungsdaten in Verbindung mit mindestens einem Referenzierungsschlüssel, der den mindestens einen Authentifizierungstoken umfasst, und
- eine Verbindungsschnittstelle zur Verbindung der Ausrüstung mit einem Endgerät über das Netzwerk anhand der Verbindungsdaten, die durch das Endgerät erhalten werden;

wobei die Ausrüstung ferner ein Modul zum Erhalt einer Kennung, die der Ausrüstung zugewiesen ist, und mindestens eines Authentifizierungsdatenelements eines Benutzers der Ausrüstung umfasst, wobei das Authentifizierungstoken-Erzeugungsmodul geeignet ist, den Authentifizierungstoken anhand der Kennung und des mindestens einen Authentifizierungsdatenelements zu erzeugen.

**13.** Verfahren zum Erhalt von Daten zur Verbindung mit einer Ausrüstung über ein Netzwerk, wobei das Verfahren von einem Endgerät durchgeführt wird und Folgendes umfasst:

- einen Schritt des Sendens, an einen Server zur Referenzierung von Verbindungsdaten, durch das Endgerät, mindestens einer Anforderung zum Erhalt von Verbindungsdaten, die einen Referenzierungsschlüssel umfasst, wobei der Referenzierungsschlüssel mindestens einen Authentifizierungstoken umfasst, der ein Authentifizierungsdatenelement der Menge bildet, die von der Ausrüstung und einem Benutzer der Ausrüstung gebildet wird,
- einen Schritt des Empfangens, vom Server zur Referenzierung von Verbindungsdaten, von Verbindungsdaten, die in Verbindung mit dem gesendeten Referenzierungsschlüssel in einer Datenbank gespeichert sind, und
- einen Schritt des Kommunizierens der empfangenen Verbindungsdaten, der geeignet ist, eine Verbindung mit der Ausrüstung über das Netzwerk herzustellen, wenn sich der gesendete Referenzierungsschlüssel in der Datenbank befindet;

wobei das Verfahren ferner einen Schritt des Erzeugens des mindestens einen Authentifizierungstokens anhand mindestens einer Kennung, die der Ausrüstung zugewiesen ist, und mindestens eines Authentifizierungsdatenelements eines Benutzers der Ausrüstung umfasst,
wobei der Referenzierungsserver ein Domainnamenserver ist, wobei der Referenzierungsschlüssel von einem Domainnamen gebildet wird, wovon der Authentifizierungstoken eine Subdomain bildet, wobei ein Abschnitt des Domainnamens in der Ausrüstung, im Referenzierungsserver und im Endgerät bei einem Erstkonfigurationsschritt abgespeichert wird.

## Claims

**1.** Method for managing data for connecting to an equipment (GW) via a network, the method comprising:

- a step of reception, by a referencing server (SDNS), from said equipment, of connection data to said equipment and of at least one authentication token constituting an authentication datum of the set consisting of the equipment and a user of said equipment;
- a step of referencing of said equipment by the referencing server by storage in a database (DB), of the connection data received in association with at least one referencing key generated by the server, the referencing key comprising said at least one authentication token;
- a step of reception, by the server, originating from a terminal (MT), of at least one request to obtain connection data comprising said referencing key, said referencing key comprising the authentication token generated by the terminal;
- step of transmission to said terminal of the connection data stored in association with the received reference key, if the received reference key is located in the database,
- the referencing server being a domain name server, the referencing key consisting of a domain name of which said authentication token constitutes a subdomain, a part of the domain name being stored in the equipment, in the referencing server and in the terminal in an initial configuration step.

**2.** Method according to Claim 1, wherein the authentication token is generated from at least one identifier assigned to said equipment and from at least one authentication datum of a user of said equipment.

**3.** Method according to either one of the preceding claims, wherein the referencing step is performed subject to the condition of authentication of said equipment by the referencing server.

**4.** Method according to Claim 2, wherein the authentication token is obtained by a cryptographic derivation operation applied to said identifier and to said at least one authentication datum.

**5.** Method according to Claim 2 or 4, wherein the authentication token is generated also from a random datum generated for a set of at least one equipment.

**6.** Method according to any one of the preceding claims, wherein the authentication token is a cryptographic key, specific to the set composed of the user and of said equipment.

**7.** Method according to Claim 5, wherein the authentication token is a cryptographic key, representative of the identifier assigned to the equipment, of the authentication datum of the user and of the random datum specific to the equipment.

**8.** Computer program comprising software instructions for the implementation of a method according to one of the preceding claims when said program is run by a data processor of a referencing server.

9. Storage medium that can be read by a data processor of a referencing server on which is stored a program comprising program code instructions for the execution of the steps of a method according to one of Claims 1 to 7.

10. Referencing server for connection data to at least one equipment comprising:

- a reception module for receiving, from one said equipment, connection data to said equipment and at least one authentication token constituting an authentication datum of the set consisting of the equipment and a user of said equipment;
- a referencing module for referencing said equipment designed to store, in a database, the connection data received in association with at least one referencing key generated by the server, the referencing key comprising said at least one authentication token;
- a reception module for receiving, from a terminal, a request to obtain connection data comprising said referencing key, said referencing key comprising the authentication token generated by the terminal;
- a transmission module for transmitting, to said terminal, connection data stored in association with the received referencing key, if the received referencing key is located in the database,

the referencing server being a domain name server, the referencing key consisting of a domain name of which said authentication token constitutes a subdomain, a part of the domain name being stored in the equipment, in the referencing server and in the terminal in an initial configuration step.

11. Terminal designed to be connected to a connection data referencing server and transmit a request to obtain connection data to an equipment via a network, comprising:

- a sending module for sending, to said server, at least one request to obtain connection data comprising a referencing key, the referencing key comprising at least one authentication token constituting an authentication datum of the set consisting of the equipment and a user of said equipment,
- a reception module for receiving, from said server, connection data stored in association with the referencing key sent, and
- a communication interface suitable for establishing a communication link with the equipment via the network if the referencing key sent is located in the database;

the terminal further comprises an authentication token generation module suitable for generating said authentication token from an identifier assigned to said equipment and from at least one authentication datum of a user of said equipment;
the referencing server being a domain name server, the referencing key consisting of a domain name of which said authentication token constitutes a subdomain, a part of the domain name being stored in the equipment, in the referencing server and in the terminal in an initial configuration step.

12. System comprising a connection data referencing server according to Claim 10 and an equipment designed to be connected to a connection data referencing server, the equipment further comprising:

- a module for generating the at least one authentication token,
- a module for transmitting, to said referencing server, at least one request to store connection data in association with at least one referencing key comprising said at least one authentication token, and
- a connection interface for connecting the equipment to a terminal via the network from the connection data obtained by the terminal;

the equipment further comprising a module for obtaining an identifier assigned to said equipment and at least one authentication datum of a user of said equipment, the authentication token generation module being suitable for generating said authentication token from said identifier and from said at least one authentication datum.

13. Method for obtaining connection data to an equipment via a network, the method being implemented by a terminal and comprising:

- a step of sending, to a connection data referencing server, by the terminal, of at least one request to obtain the connection data comprising a referencing key, the referencing key comprising at least one authentication token constituting an authentication datum of the set consisting of the equipment and a user of said equipment,
- a step of reception, from the connection data referencing server, of connection data stored, in a database, in association with the referencing key sent, and
- a step of communication of the received connection data, suitable for establishing a link with the equipment via the network if the referencing key sent is located in the database; the method further comprising a step of generation of said at least one authentication token from at least one identifier assigned to said equipment and from at least one authentication datum of a user of said equipment,

the referencing server being a domain name server, the referencing key consisting of a domain name of which said authentication token constitutes a subdomain, a part of the domain name being stored in the equipment, in the referencing server and in the terminal in an initial configuration step.

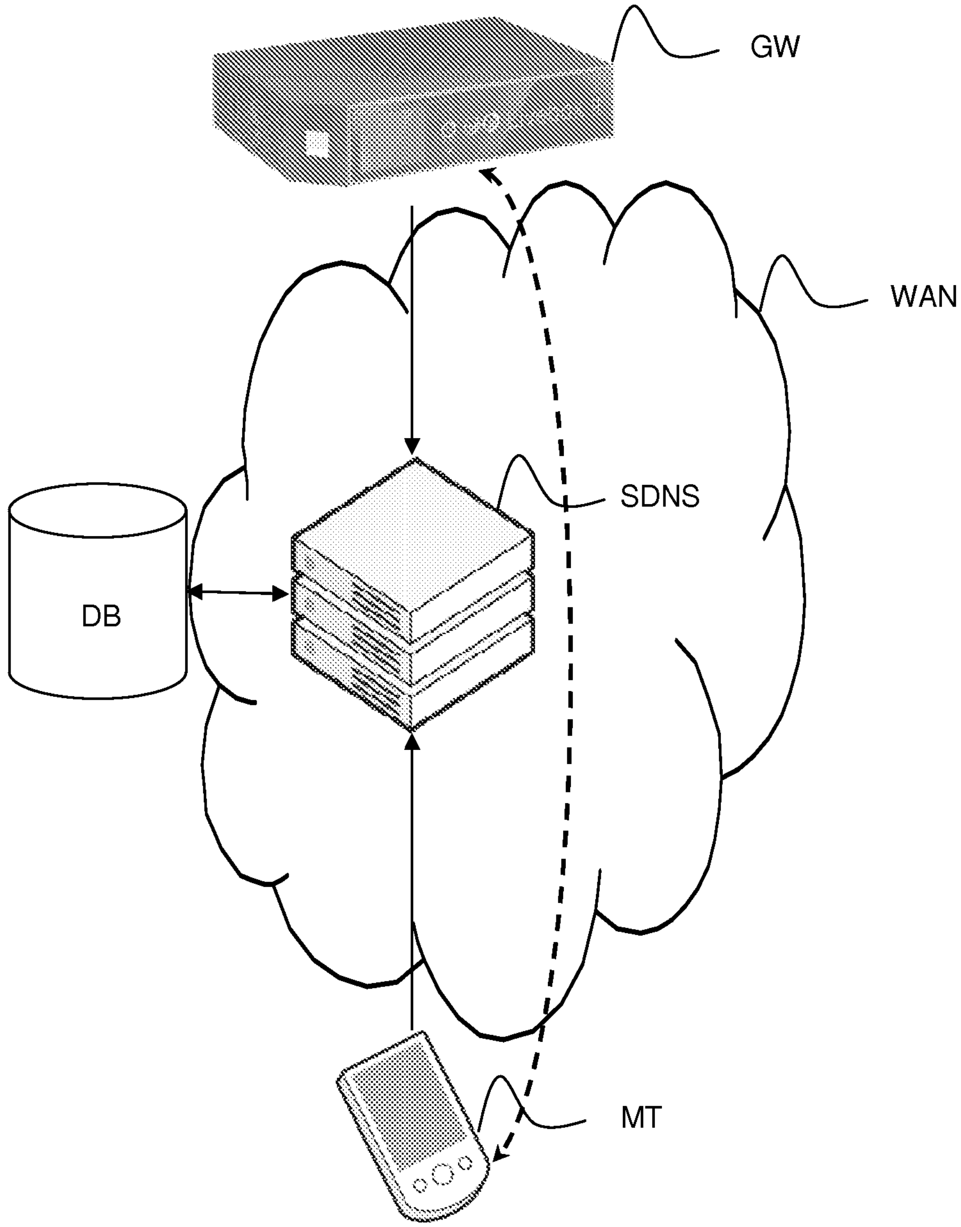


Fig. 1a

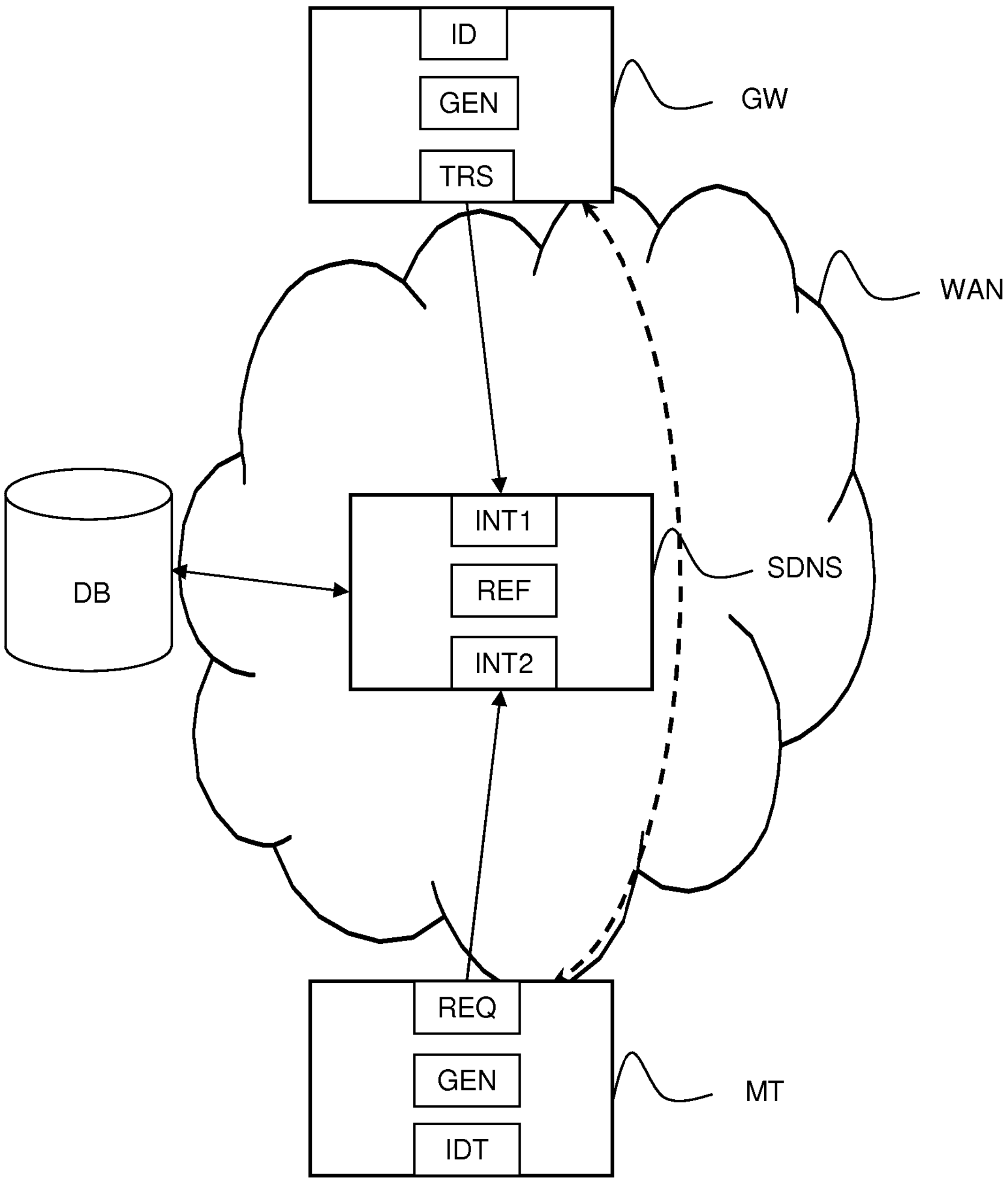


**Fig. 1b**

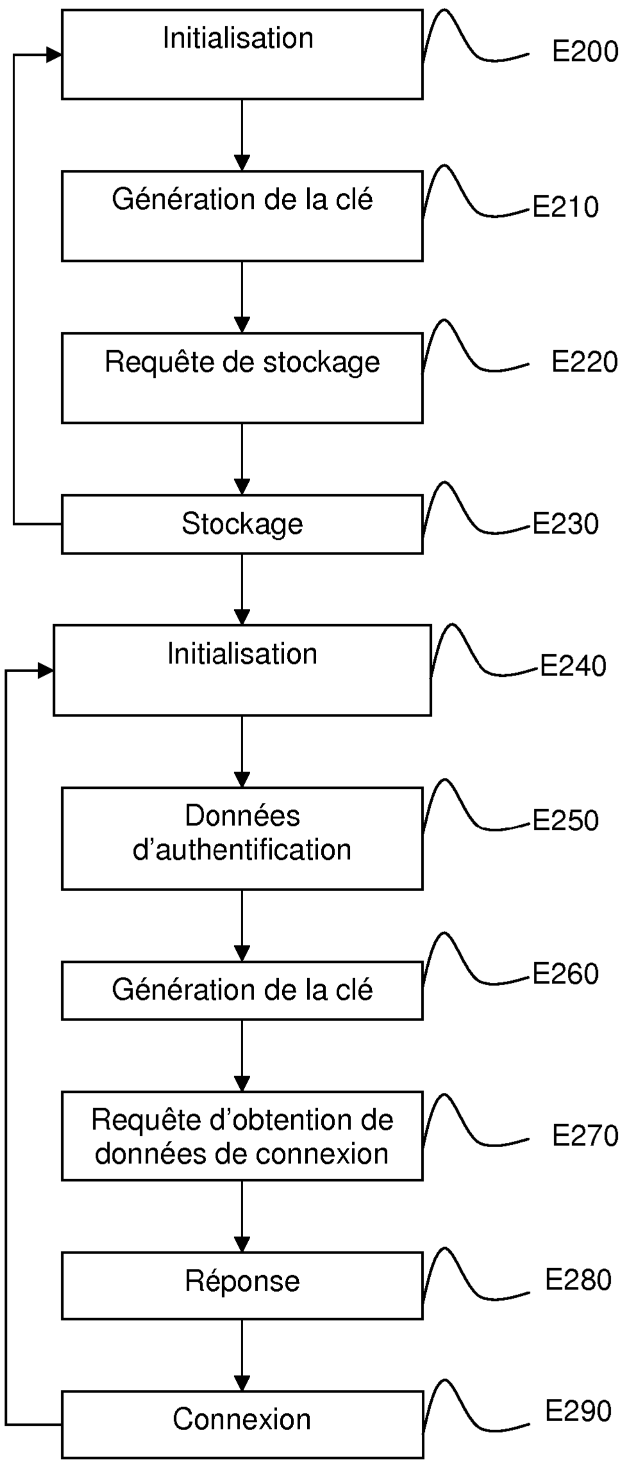
Initialisation
E200
Génération de la clé
E210
Requête de stockage
E220
Stockage
E230
Initialisation
E240
Données d'authentification
E250
Génération de la clé
E260
Requête d'obtention de données de connexion
E270
Réponse
E280
Connexion
E290

**Fig. 2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 2009144437 A1


### Littérature non-brevet citée dans la description


- Password-Based Key Dérivation Function 2. RFC 2898. IETF